# EUROPÄISCHE PATENTSCHRIFT

(11) **EP 1 694 504 B1**
(45) Veröffentlichungstag und Bekanntmachung des Hinweises auf die Patenterteilung: **20.08.2008**
(21) Anmeldenummer: 04797944.8
(22) Anmeldetag: 17.11.2004
(51) Int. Cl.: B41C 1/05, B01D 53/72, B01D 53/86, B08B 15/04

(54) **VERFAHREN ZUR HERSTELLUNG VON FLEXODRUCKPLATTEN MITTELS LASERGRAVUR**
METHOD FOR PRODUCING FLEXOGRAPHIC PRINTING PLATES BY MEANS OF LASER ENGRAVING
PROCEDE DE REALISATION DE PLAQUES D'IMPRESSION FLEXOGRAPHIQUE PAR GRAVURE LASER

(30) Priorität: 27.11.2003 DE 10355991
(43) Veröffentlichungstag der Anmeldung: 30.08.2006
(73) Patentinhaber: Flint Group Germany GmbH, 70469 Stuttgart (DE)
(72) Erfinder: Teltschik, Margit, 97753 Karlstadt (DE); STEBANI, Uwe, 67592 Flörsheim-Dalsheim (DE); SCHADEBRODT, Jens, 55129 Mainz (DE); JANSEN, Volker, 71229 Leonberg (DE)
(74) Vertreter: Huhn, Michael
(86) Internationale Anmeldenummer: PCT/EP2004/013012
(87) Internationale Veröffentlichungsnummer: WO 2005/061231

(56) Entgegenhaltungen:
- DE-A1- 3 923 829
- DE-A1- 10 211 810
- DE-A1- 10 305 258
- US-A- 4 097 251
- US-A- 5 855 651
- US-A- 6 019 952
- US-B1- 6 494 965
- THE INDUSTRIAL LASER USER, Februar 1999 (1999-02), Seiten 30-33, XP001205271 THE FUME HAZARD IN LASER MATERIAL PROCESSING OF ORGANIC MATERIALS
- HAFFERKAMP H ET AL: "EFFIZIENTES UND WIRTSCHAFTLICHES ABLUFT-REINIGUNGSVERFAHREN FUER DIE THERMISCHE POLYMERWERKSTOFFBEARBEITUNG" WASSER, LUFT UND BODEN, VEREINIGTE FACHVERLAG KRAUSSKOPF- INGENIEUR DIGEST, MAINZ, DE, Bd. 7/8, 2001, Seiten 69-72, XP009044227 ISSN: 0938-8303 in der Anmeldung erwähnt
- LASER MAGAZIN, Bd. 6, 1998, Seiten 6-11, XP009044300 ABLÜFTE AUS DER LASERBEARBEITUNG VON KUNSTSTOFFEN RICHTIG FILTRIEREN
- CHEMICAL ENGINEERING, Februar 2002 (2002-02), Seiten 62-67, XP001205061 POLLUTANT DESTRUCTION-COMPARING THERMAL OXIDIZER DESIGNS

## Beschreibung

Die vorliegende Erfindung betrifft ein Verfahren Herstellung von Flexodruckplatten mittels Laser-Direktgravur, bei dem man die im Zuge der Gravur gebildeten partikulären und gasförmigen Abbauprodukte mittels einer Absaugvorrichtung aufnimmt und den mit den Abbauprodukten beladenen Abgasstrom mittels einer Kombination aus mindestens einem Feststofffilter und mindestens einer oxidativ arbeitenden Reinigungsstufe reinigt.

Bei der Laser-Direktgravur zur Herstellung von Flexodruckformen wird ein druckendes Relief mit einem Laser direkt in die reliefbildende Schicht eines Flexodruckelementes eingraviert. Ein nachfolgender Entwicklungsschritt wie beim konventionellen Verfahren zur Herstellung von Flexodruckformen ist nicht mehr erforderlich. Die Herstellung von Flexodruckformen mittels Laser-Direktgravur ist prinzipiell bekannt, beispielsweise aus US 5,259,311, WO 93/23252, WO 02/49842, WO 02/76739 oder WO 02/83418.

Bei der Laser-Direktgravur absorbiert die Reliefschicht Laserstrahlung in einem solchen Ausmaße, so dass sie an solchen Stellen, an denen sie einem Laserstrahl ausreichender Intensität ausgesetzt ist, entfernt oder zumindest abgelöst wird. Die Schicht bzw. deren Bestandteile werden dabei verdampft und/oder zersetzt, so dass ihre Zersetzungsprodukte in Form von heißen Gasen, Dämpfen, Rauch, Aerosolen oder kleinen Partikeln von der Schicht entfernt werden. Gebräuchlich zur Gravur sind insbesondere leistungsstarke IR-Laser wie beispielsweise CO₂-Laser oder Nd-YAG-Laser. Geeignete Apparaturen zur Gravur von Flexodruckformen sind beispielsweise in EP 1 162 315 und EP 1 162 316 offenbart.

Typische Reliefschichtdicken von Flexodruckformen liegen üblicherweise zwischen 0,5 und 7 mm. Die nichtdruckenden Vertiefungen im Relief betragen im Rasterbereich mindestens 0,03 mm, bei anderen Negativelementen deutlich mehr und können bei dicken Platten Werte von bis zu 3 mm annehmen. Bei der Laser-Direktgravur müssen mit dem Laser also große Mengen an Material entfernt werden. Schon bei einer Gravurtiefe von nur 0,5 bis 0,7 mm und durchschnittlich 70 % Abtragungsgrad werden ca. 500 g Material pro m² Platte abgetragen. Die Laser-Direktgravur unterscheidet sich in diesem Punkt sehr deutlich von anderen Techniken aus dem Bereich der Druckplatten, bei denen Laser nur zum Beschreiben einer Maske eingesetzt werden, aber die eigentliche Herstellung der Druckform nach wie vor mittels eines Auswasch- bzw. Entwicklungsprozesses erfolgt. Derartige laserbeschreibbare Masken haben üblicherweise nur eine Dicke von wenigen µm. Die Mengen des zu entfernenden Materials betragen in diesem Falle daher üblicherweise nur 2 bis 6 g / m².

Unter dem Einfluss der Laserstrahlung wird das Material der reliefbildenden Schicht zum einen verdampft, andererseits in mehr oder weniger große Bruchstücke gespalten. Hierbei entstehen einerseits klebrige organische Aerosole mit einem Partikeldurchmesser von üblicherweise < 1 µm und außerdem flüchtige organische Substanzen. Bei den flüchtigen Komponenten kann es sich sowohl um verschiedene Pyrolyse-Produkte handeln, wie auch um definierte Monomere, die durch thermische Depolymerisation polymerer Komponenten erzeugt werden. Moderne Flexodruckplatten enthalten üblicherweise Bindemittel, welche als monomere Bausteine Styrol sowie Butadien und/oder Isopren enthalten. Es kann sich beispielsweise um Blockcopolymere vom Styrol-Butadien- oder vom Styrol-Isopren-Typ handeln. Auch weitere Komponenten von Flexodruckplatten, wie z.B. Weichmacheröle können Butadien oder Isopren als Bausteine enthalten. Durch Depolymerisation von Bindemitteln und Weichmachern entstehen bei der Gravur von Flexodruckplatten auf Basis von SIS- oder SBS-Kautschuken neben anderen Abbauprodukten große Mengen an Styrol und Isopren bzw. Butadien. Weitere Einzelheiten zu den entstehenden Zersetzungsprodukten und dem Umgang damit sind beispielsweise offenbart in Martin Goede, *"Entstehung und Minderung der Schadstoffemissionen bei der Laserstrahlbearbeitung von Polymenwerkstoffen"* Fortschritt-Berichte VDI, Reihe 5, Nr. 587, Düsseldorf, VDI-Verlag, 2000.

Laserapparaturen zum Schneiden oder Gravieren weisen üblicherweise Absaugvorrichtungen auf, mit denen die gebildeten Abbauprodukte aufgenommen werden. Beispiele für Laserköpfe mit integrierter Absaugung sind in EP-B 330 565 oder WO 99/38643 offenbart. Hierdurch wird sowohl die Verunreinigung der Apparatur sowie des Arbeitsplatzes mit den Abbauprodukten vermieden.

Bei der Lasergravur von Flexodruckplatten entsteht ein Abgasstrom, weicher neben der angesaugten Luft große Mengen an gasförmigen Produkten, insbesondere Styrol, Butadien und/oder Isopren, sowie große Mengen an klebrigen Aerosolen enthält. Die Abbauprodukte können nicht einfach an die Umwelt abgegeben werden, sondern die Abgase müssen gereinigt werden, um die zulässigen Grenzwerte einzuhalten. Beispielsweise darf nach der deutschen Technischen Anleitung Luft das Abgas nicht mehr als 1 mg Butadien pro m³ enthalten.

In *"*WLB Wasser, Luft und Boden, Bd. 7/8, 2001 S. 69 ff. "(VF Online Medien GmbH & Co. KG, Mainz) wird ein Abluftreinigungssystem für die thermische Polymerwerkstoffbearbeitung offenbart, welches eine Kombination aus zwei verschiedenen Filtern darstellt. In einem Feststofffilter werden zunächst die Aerosole unter Verwendung eines inerten Hilfsstoffes abgeschieden und die gasförmigen Bestandteile im Anschluss daran in einer Aktivkohle-Absober-Schüttung absorbiert.

Dieses Verfahren zur Abgasreinigung weist jedoch bei der Anwendung im Bereich der Laser-Direktgravur von Flexodruckplatten eine nicht ausreichende Wirtschaftlichkeit auf. Butadien und Isopren werden an Aktivkohle nur sehr schlecht absorbiert. Die maximale Beladung von Butadien an Aktivkohle beträgt bei Raumtemperatur nur ca. 4 Gew. %. Die Kapazität einer Füllung ist daher schon sehr schnell erschöpft.

DE-A 39 23 829 betrifft eine Absauganlage zum Absaugen von bei der Bearbeitung von Werkstoffen mittels Laser entstehenden Reaktionsprodukten, beispielsweise beim Schneiden oder Abtragen von Metallen und Kunststoffen mittels Laserstrahlen. Erwähnt wird die Gegenwart von Filtern zwischen Absaughaube und Pumpvorrichtung. Die Natur der Filter wird nicht näher erläutert.

US 6,494,965 offenbart ein Verfahren zum Absaugen von bei der Laserbeschriftung von laserempfindlichen Medien entstehenden Nebenprodukten. Als laserempfindliche Medien werden flexographische Druckplatten erwähnt. Diese können u.a. auf einer zylindrischen Oberfläche aufgebracht sein. Die Weiterbehandlung der abgesaugten Nebenprodukte wird nicht erwähnt.

DE-A 103 05 258 offenbart eine Vorrichtung zum Beschriften eines laserempfindlichen Mediums, bei dem zur Vermeidung von Ablagerungen von Nebenprodukten des Beschriftungsprozesses die optischen Fenster des Bildgebungssystems mit Druckluft gespült werden. Als laserempfindliche Materialien werden auf einen Zylinder aufgebrachte Flexodruckplatten erwähnt. Die bei dem Bildgebungsprozess gebildeten Nebenprodukte können fest, flüssig oder gasförmiger Natur sein. Die Weiterbehandlung der abgesaugten Gase, Flüssigkeiten beziehungsweise teilchenförmigen Feststoffe wird nicht beschrieben.

The Industrial Laser User, Februar 1999, Seiten 30 bis 33 erwähnt, dass beim Schneiden von organischen Materialien wie Kunststoffen oder Holz es zu Aerosol-Emissionen kommen kann. Erwähnt wird die Verwendung von bestimmten Filtern (selfcleaning/fabric filters) zur Filtration von Aerosolen. Ferner wird erwähnt, dass bei der Laserbearbeitung von organischen Materialien (Kunststoffe, Holz, Papier) eine Gasfiltration erforderlich ist. Weiterhin werden verschiedene Absaugvorrichtungen gezeigt.

US 4,097,251 offenbart eine Filtervorrichtung für klebrige Materialien, beispielsweise Teer enthaltende Abgase. Diese werden an Kohlepulver adsorbiert, welches die Filterelemente als Schutzschicht umgibt.

US 5,855,651 offenbart ein Verfahren zur Behandlung von Abgasen aus einer CVD-Anlage, welches viskose Substanzen enthält, bei dem das Abgas mit einem Filterhilfsmittel in Kontakt gebracht wird und mit dem Filterhilfsmittel in einer Filter- und Staubsammeleinheit niedergeschlagen wird.

Laser Magazin, Band 6, 1998, Seiten 6 bis 11 betrifft die Abluftreinigung bei der Laserbearbeitung von Kunststoffen. Genannt werden biologische katalytische und adsorptiv/katalytische Verfahren der Abluftreinigung. Es wird darauf hingewiesen, dass bei der Laserstrahlmaterialbearbeitung gas- und partikelförmige Prozessnebenprodukte infolge Materialverdampfung und Zersetzung entstehen.

Chemical Engineering, Februar 2002, Seiten 62 bis 67 betrifft Vorrichtungen zur oxidativen Unschädlichmachung von organischen Emissionen. Es werden verschiedene Oxidator-Typen beschrieben, u.a. auch katalytische thermische Oxidatoren (catalytic thermal oxidizers) und direkte Flammoxidatoren (direct-flame oxidizers).

DE-A 102 11 810 betrifft ein Verfahren zur Minderung von Schadstoffen in Abluftströmen, die beim Plasma- und Laserschneiden von organischen Materialien anfallen. Dabei wird der schadstoffbelastete Abluftstrom über einen Adsorber/Katalysator geführt. Anschließend wird der Abluftstrom durch ein Kreislaufsystem geführt, das einen Plasmagenerator enthält.

US 6,019,952 offenbart ein Verfahren zur oxidativen Entfernung von Schadstoffen aus Sauerstoff enthaltenden Abgasen an einem Katalysator.

Weiterhin muss bei der Lasergravur von Flexodruckplatten sehr intensiv abgesaugt werden, um zu verhindern, dass sich die im Zuge der Gravur gebildeten, sehr klebrigen Aerosole wieder auf der druckenden Oberfläche der Platte abscheiden. Die Wiederabscheidung von Aerosolen auf der Oberfläche ist höchst unerwünscht, da sich durch die Abscheidungen beim Drucken das Druckbild erheblich verschlechtert. Die Oberfläche der Druckform muss daher für den Fall, dass sich Polymere wieder abscheiden, nach der Gravur mit einem geeigneten Reinigungsmittel, beispielsweise mit einem üblichen Flexoauswaschmittel nachgereinigt werden. Da die Druckformen im Flexoauswaschmittel quellen, muss die Druckform vor dem Einsatz wieder sorgfältig getrocknet werden. Dies dauert üblicherweise 2 bis 3 Stunden und ist höchst unerwünscht, da hierdurch der Zeitvorteil gegenüber konventioneller Verarbeitung wieder zunichte gemacht wird.

Um das Wiederabscheiden zu vermeiden, sind zum Absaugen typischerweise mindestens 0,5 m³ Luft pro g der Zersetzungsprodukte erforderlich. Das Abgas bei der Laser-Direktgravur von Flexodruckplatten ist daher durch sehr hohe Volumenströme bei geringer Beladung gekennzeichnet. Die gasförmigen Produkte sind nur in geringer Konzentration im Gasstrom enthalten und das Adsorptions-Desorptions-Gleichgewicht an Aktivkohle ist ungünstig für eine vollständige Abscheidung von Butadien. Daher sind sehr große Aktivkohlefilter erforderlich und die Kosten zur Entsorgung und/oder Reaktivierung der Aktivkohle dementsprechend sehr hoch. Zeolithe adsorbieren Butadien und Isopren zwar besser als Aktivkohle, sind aber auch deutlich teurer als Aktivkohle. Außerdem fallen nach wie vor Kosten zur Reaktivierung und/oder Entsorgung an.

Weiterhin ist zu berücksichtigen, dass es sich bei Anlagen zur Laser-Direktgravur von Flexodruckplatten nicht um Großanlagen in industriellem Maßstab handelt. Die Gravur von Druckplatten findet vielmehr endverbrauchemah und dezentral entweder in einer Druckerei oder in einer Klischeeanstalt statt, also in typischen Kleinbetrieben oder mittelständischen Betrieben statt. Die Anlagen werden nicht vollkontinuierlich sondern chargenweise betrieben. Eine Abgasreinigungsanlage für die Laser-Direktgravur von Flexodruckplatten muss auch diese Randbedingungen berücksichtigen.

Dementsprechend wurde ein Verfahren zur Herstellung von Flexodruckformen mittels Laser-Direktgravur durch Eingravieren eines Reliefs in ein lasergravierbares Flexodruckelement unter Verwendung einer Laserapparatur gefunden, welche mindestens
- eine Einheit zur Aufnahme eines zylindrischen Trägers für Flexodruckelemente, in der der zylindrische Träger drehbar gelagert werden kann,
- eine Antriebseinheit zum Drehen des Zylinders,
- einen Laserkopf, welcher mindestens einen Laserstrahl emittiert, wobei der Laserkopf sowie die Aufnahmeeinheit mit dem zylindrischen Träger koaxial gegeneinander verschiebbar gelagert sind, sowie
- eine Absaugvorrichtung umfasst,
und bei dem man als Ausgangsmaterial ein lasergravierbares Flexodruckelement, mindestens umfassend einen dimensionsstabilen Träger sowie eine elastomere, reliefbildende Schicht mit einer Dicke von mindestens 0,2 mm, umfassend mindestens ein elastomeres Bindemittel, einsetzt, wobei das Verfahren mindestens die folgenden Schritte umfasst:
(a) Aufbringen eines lasergravierbaren Flexodruckelementes auf den zylindrischen Träger und Montieren des zylindrischen Trägers in die Aufnahmeeinheit,
(b) Versetzen des zylindrischen Trägers in Drehung,
(c) Eingravieren eines Druckreliefs in die reliefbildende Schicht mit Hilfe des mindestens einen Laserstrahles, wobei die Tiefe der mit dem Laser einzugravierenden Reliefelemente mindestens 0,03 mm beträgt,
wobei man mittels der Absaugvorrichtung die im Zuge der Gravur gebildeten partikulären und gasförmigen Abbauprodukte aufnimmt und den mit den Abbauprodukten beladenen Abgasstrom mittels eines Systems aus mindestens zwei verschiedenen Filtereinheiten reinigt, wobei man in einer ersten Filtereinheit partikuläre Abbauprodukte in Gegenwart eines feinteiligen, nicht klebrigen Feststoffes mittels eines Feststofffilters abscheidet und danach in einer zweiten Filtereinheit verbliebene gasförmige Abbauprodukte mittels katalytischer Oxidation oxidativ aus dem Abgasstrom entfernt, wobei die Menge des angesaugten Gases mindestens 0,1 m³ pro g abgebauten Materials beträgt und die zweite Filtereinheit eine der oxidativen Reinigungsstufe vorgeschaltete Puffereinhleit umfasst, in der die gasförmigen Abbauprodukte im Abgas ganz oder teilweise gesammelt und in einer definierten Konzentration an die Reinigungsstufe abgegeben werden.

### Verzeichnis der Abbildungen:

- Abbildung 1:: Schematische Darstellung des Verfahrens mit Absaugung (4), Feststofffilter (5) und oxidativer Reinigungsstufe (6)
- Abbildung 2:: Schematische Darstellung des Feststofffilters (5)
- Abbildung 3:: Schematische Darstellung der oxidativen Reinigungsstufe (6)
- Abbildung 4:: Schematische Darstellung einer bevorzugten Ausführungsform der Absaugung
- Abbildung 5:: Schnitt durch eine bevorzugte Ausführungsform der Absaugung
- Abbildung 6:: Schnitt durch eine andere bevorzugte Ausführungsform der Absaugung

### Zu der Erfindung ist im Einzelnen das Folgende auszuführen:

Als Ausgangsmaterial zur Ausführung des erfindungsgemäßen Verfahrens wird ein lasergravierbares Flexodruckelement eingesetzt, welches in prinzipiell bekannter Art und Weise mindestens einen dimensionsstabilen Träger sowie eine elastomere, reliefbildende Schicht mit einer Dicke von mindestens 0,2 mm, bevorzugt mindestens 0,3 mm und besonders bevorzugt mindestens 0,5 mm umfasst. Im Regelfalle beträgt die Dicke 0,5 bis 2,5 mm.

Bei dem dimensionsstabilen Träger kann es sich in prinzipiell bekannter Art und Weise um eine Polymer- oder Metallfolie handeln, oder aber auch um eine zylindrische Hülse. Die reliefbildende Schicht umfasst mindestens ein elastomeres Bindemittel. Beispiele geeigneter elastomerer Bindemittel umfassen Naturkautschuk, Polybutadien, Polyisopren, Styrol-Butadien-Kautschuk, Nitril-Butadien-Kautschuk, Butyl-Kautschuk, Styrol-Isopren-Kautschuk, Polynorbornen-Kautschuk oder Ethylen-Propylen-Dien-Kautschuk (EPDM) oder thermoplastisch elastomere Blockcopolymere vom Styrol-Butadien oder Styrol-Isopren-Typ. Die reliefbildende Schicht wird üblicherweise durch Vernetzung einer vernetzbaren Schicht erhalten, welche mindestens die besagten Bindemittel sowie zur Vernetzung geeignete Komponenten, beispielsweise ethylenisch ungesättigte Monomere sowie geeignete Initiatoren umfasst. Die Vernetzung kann beispielsweise fotochemisch vorgenommen werden. Weiterhin können optional Absorber für Laserstrahlung, Weichmacher und andere Hilfsstoffe wie Farbstoffe, Dispergierhilfsmittel oder dergleichen eingesetzt werden. Lasergravierbare Flexodruckelemente sind prinzipiell bekannt. Lasergravierbare Flexodruckelemente können nur eine reliefbildende Schicht oder auch mehrere gleichen, ähnlichen oder verschiedenen Aufbaues umfassen. Einzelheiten zum Aufbau und zur Zusammensetzung lasergravierbarer Flexodruckelemente sind beispielsweise in WO 93/23252, WO 93/23253, US 5,259,311, WO 02/49842, WO 02/76739 oder WO 02/83418 offenbart, auf die wir an dieser Stelle ausdrücklich verweisen.

Das erfindungsgemäße Verfahren ist nicht auf die Verwendung ganz bestimmter Flexodruckelemente als Ausgangsmaterialien beschränkt. Die Vorteile des Verfahrens kommen aber ganz besonders bei solchen Flexodruckelementen zum Tragen, deren reliefbildende Schicht Butadien und /oder Isopren-Einheiten als Bausteine umfassende Komponenten umfasst. Zu nennen sind hier insbesondere Bindemittel, welche Butadien und/oder Isopren-Einheiten umfassen, wie beispielsweise Naturkautschuk, Polybutadien, Polyisopren, Styrol-Butadien-Kautschuk, Nitril-Butadien-Kautschuk, Styrol-Isopren-Kautschuk, oder thermoplastisch elastomere Blockcopolymere vom Styrol-Butadien oder Styrol-Isopren-Typ, wie beispielsweise SBS- oder SIS-Blockcopolymere. Zu nennen sind weiterhin Butadien oder Isopren umfassende Weichmacher wie beispielsweise oligomere Styrol-Butadien-Copolymere, flüssige Oligobutadiene oder Oligoisoprene, insbesondere solche mit einem Molekulargewicht zwischen 500 und 5000 g/mol oder flüssige oligomere Acrylnitril-Butadien-Copolymere. Bei der Laser-Direktgravur derartiger Flexodruckelemente entsteht ein Abgas mit einem besonders hohen Gehalt von Butadien und/oder Isopren, welches sich mittels des erfinderischen Verfahrens dennoch zuverlässig und ökonomisch reinigen lässt.

Bei der zur Ausführung des erfindungsgemäßen Verfahrens eingesetzten Laserapparatur handelt es sich um eine Apparatur mit einem sogenannten "rotierenden Zylinder". Die Apparatur weist in prinzipiell bekannter Art und Weise eine Einheit zur Aufnahme eines zylindrischen Trägers für Flexodruckelemente auf, so dass ein zylindrischer Träger drehbar gelagert werden kann. Die Aufnahmeeinheit ist mit einer Antriebseinheit verbunden, durch die der Zylinder in Drehung versetzt werden kann. Um einen ruhigen Lauf zu gewährleisten, sollte der zylindrische Träger üblicherweise an beiden Seiten unterstützt werden. Derartige Apparaturen sind prinzipiell bekannt. Ihr Aufbau und ihre Funktionsweise ist beispielsweise dargestellt in EP-A 1 262 315, EP-A 1 262 316 oder WO 97/19783. Einzelheiten sind insbesondere in EP-A 1 262 315, Seiten 14 bis 17 dargestellt.

Bei dem zylindrischen Träger kann es sich beispielsweise um eine Trägerwalze aus Metall oder anderen Materialien handeln, auf die ein übliches flächenförmiges Flexodruckelement auf flexiblem Träger mittels eines doppelseitigen Klebebandes geklebt wird. Als Flexodruckelemente können aber auch sogenannte Sleeves eingesetzt werden. Bei Sleeves ist eine reliefbildende Schicht direkt oder indirekt auf einen zylindrischen Träger, beispielsweise aus Aluminium oder Kunststoffen aufgebracht. Der Sleeve wird als solcher in die Druckmaschine eingebaut. Im Regelfalle wird der Träger von der reliefbildenden Schicht vollständig umhüllt. Man spricht dann von sogenannten Endlos-Nahtios-Sleeves. Zur Verbesserung der drucktechnischen Eigenschaften kann auch zwischen reliefbildender Schicht -wahlweise mit oder ohne dimensionsstabilem Träger- und der Hülse ein elastischer Unterbau vorhanden sein.

Sleeves können direkt in die Aufnahmeeinheit montiert werden. Der zylindrische Träger des Sleeves ist in diesem Falle identisch mit dem zylindrischen Träger der Apparatur. Sleeves können auch auf eine Trägerwalze aufgeschoben und fixiert werden. Vorteilhaft kann man für Sleeves sogenannte Luftzylinder einsetzen, bei dem das Auf- und Abschieben der Sleeves auf den Trägerzylinder durch ein Luftkissen aus Druckluft unterstützt wird. Einzelheiten hierzu finden sich beispielsweise in "Technik des Flexodrucks", S. 73 ff., Coating Verlag, St. Gallen, 1999.

Die Apparatur verfügt weiterhin über einen Laserkopf, welcher mindestens einen Laserstrahl emittiert. Bevorzugt werden Köpfe eingesetzt, welche mehrere Laserstrahlen emittieren, beispielsweise 3 Laserstrahlen. Sie können unterschiedliche Leistung aufweisen. Der Laserkopf und der zylindrische Träger sind koaxial gegeneinander verschiebbar gelagert. Beim Betrieb der Apparatur werden der zylindrische Träger in Drehung versetzt und der Laserstrahl und der Zylinder translatorisch gegeneinander verschoben, so dass der Laserstrahl die gesamte Oberfläche des Flexodruckelementes nach und nach abtastet und -abhängig von Steuersignal- durch entsprechende Strahlintensität die Oberfläche mehr oder weniger stark abträgt. Wie die translatorische Bewegung zwischen dem Laserkopf und dem Zylinder zustande kommt, ist nicht erfindungswesentlich. Es können der Zylinder oder der Laserkopf oder auch beide verschiebbar gelagert sein.

Die erfindungsgemäß eingesetzte Apparatur verfügt weiterhin über eine Vorrichtung zum Absaugen der im Zuge der Gravur gebildeten Abbauprodukte. Die Absaugung sollte möglichst nahe zu der Stelle angeordnet werden, an der der Laserstrahl auf die Oberfläche der reliefbildenden Schicht trifft. Es kann sich beispielsweise um eine darüber angeordnete Glocke handeln. Die Absaugung kann in der Apparatur fixiert sein oder -für den Fall eines beweglich gelagerten Laserkopfes- bevorzugt mit dem Laserkopf mitbewegt werden. Dem Fachmann sind Konstruktionen von Absaugungen für Laserköpfe prinzipiell bekannt. Beispielhaft sei auf WO 99/38643 oder EP-A 330 565 verwiesen.

Vorteilhaft ist die gesamte Apparatur gekapselt, um unerwünschten Austritt der Abbauprodukte in die Umgebung noch besser zu unterbinden. Der Zugang zum Inneren der Apparatur, insbesondere zu Laserkopf und Trägerzylinder, wird über verschließbare Klappen, Türen, Schiebetüren oder dergleichen gewährleistet.

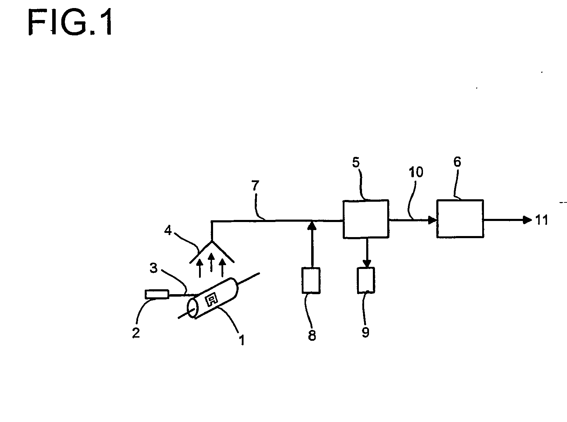

Das erfindungsgemäße Verfahren sowie bevorzugte Ausführungsformen sind schematisch mittels der Abbildungen 1 bis 6 dargestellt. Die Abbildungen sollen dem leichteren Verständnis dienen, ohne dass die Erfindung damit auf die dargestellte Ausführungsform beschränkt werden soll.

Abbildung 1 zeigt eine schematische Darstellung des gesamten Verfahrens. Gezeigt ist der Zylinder (1), auf den ein Flexodruckelement montiert ist. Ein Laser (2) emittiert einen Laserstrahl (3), mit dem die reliefbildende Schicht graviert wird. Der Übersicht halber sind nur ein Laser und nur ein Strahl eingezeichnet, es kann sich aber auch um mehrere Strahlen mehrerer gleichartiger oder verschiedenartiger Laser, beispielsweise um CO₂-Laser oder um Nd-YAG-Laser handeln. Über eine Absaugung (4) werden die mit dem Laser erzeugten Abbauprodukte der Schicht abgesaugt und das Gemisch aus Luft, Aerosolen und gasförmigen Abbauprodukten (7) über eine Leitung der Filtereinheit zugeführt. In der Darstellung der besseren Übersicht halber weggelassen sind Ansaugaggregate wie Ventilatoren, Vakuumpumpen oder dergleichen, die zum Ansaugen und Transport des Abgases erforderlich sind. Je nach dem Druckverlust der gesamten Vorrichtung kann ein einziges Ansaugaggregat ausreichend sein, oder aber es müssen mehrere Ansaugaggregate an verschiedenen Stellen der Anlage eingebaut werden.

Die Menge des angesaugten Gasvolumens pro Zeiteinheit (Abluftvolumenstrom) und des pro Gewichtseinheit abgebauten Materials beträgt mindestens 0,1 m³ pro g abgebauten Materials. Im Regelfalle wird die Oberfläche der Druckform umso weniger durch Abbauprodukte verunreinigt, je höher der Abluftvolumenstrom ist. Bevorzugt beträgt der Volumenstrom mindestens 0,5 m³/g und besonders bevorzugt mindestens 1,0 m³/g. Bei einer Laserapparatur durchschnittlicher Größe, welche zur Gravur von etwa 1 m² Platte / h und einem Abtrag von 500 bis 1000 g/m² ausgelegt ist, entspricht dies je nach Abtrag einem Volumenstrom von mindestens 50 bis 100 m³/h, bevorzugt mindestens 250 bis 500 m³/h und besonders bevorzugt mindestens 500 bis 1000 m³/h.

Der Abgasstrom (7) wird zunächst in einem Feststofffilter bzw. Partikelfilter (5) gereinigt. Hierbei werden die im Gasstrom vorhandenen partikulären Abbauprodukte, beispielsweise klebrige Aerosole, abgeschieden, während die gasförmigen Bestandteile des Abgases den Filter passieren. Der Feststofffilter umfasst in prinzipiell bekannter Art und Weise geeignete Filterelemente zum Abscheiden der festen Partikel. Die Abscheidung der partikulären Abbauprodukte wird in Gegenwart eines feinteiligen, nicht-klebrigen Feststoffes vorgenommen. Dadurch wird vermieden, dass die klebrigen Aerosole die Filterelemente verkleben. Der feinteilige Feststoff kann direkt in den Feststofffilter eindosiert werden. Bevorzugt wird er aber noch vor dem Feststofffilter aus einem Vorratsgefäß (8) in die Leitung (7) eingespeist, beispielsweise mit Hilfe eines geeigneten Trägergases, um eine möglichst innige Mischung mit dem Abgas zu erreichen. Der feinteilige, nicht-klebrige Feststoff belegt die klebrigen Aerosole und die Filterelemente. Er verhindert somit, dass der Feststoff die Filter verklebt. Statt dessen resultiert ein gut abscheidbarer Feststoff (9). Als feinteilige, nicht-klebrige Feststoffe kommen insbesondere Feststoffe mit einem Anteil von mindestens 50% an Partikeln der Größe ≤ 20 µm in Frage. Bevorzugt beträgt der Anteil an Partikeln ≤ 2 µm mindestens 50%.

Beispiele geeigneter Feststoffe umfassen Lehm, CaCO₃, Aktivkohle, SiO₂, organisch modifizierte Kieselsäuren, Zeolithe, feinteilige Pulver von Kaolinit, Muskovit oder Monmorillonit. Die Menge des Feststoffes wird vom Fachmann je nach der Art des Abgases bestimmt. In aller Regel bewährt hat sich eine Menge von 0,1 bis 10 g Feststoff pro g abgetragenen Materials, bevorzugt 0,5 bis 2 g Feststoff pro g abgetragenen Materials.

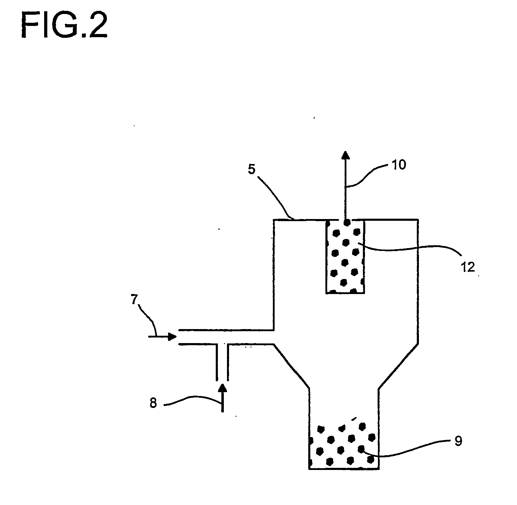

Die Bauart des Feststofffilters ist nicht erfindungswesentlich. Eine typische Ausführungsform eines Feststofffilters ist in Abbildung 2 dargestellt. Das mit den Feststoffen beladene Gas (7) wird mit dem feinteiligen Feststoff (8) versetzt und in einem Filter mit einer oder bevorzugt einer Vielzahl von Filterelementen (12) abgeschieden. Es resultiert ein Gasstrom (10), der im wesentlichen frei von Feststoffen ist und nur noch die gasförmigen bzw. flüchtigen Abbauprodukte enthält. Im Regelfalle kann ein Abscheidegrad von mehr als 99 % bezüglich der ursprünglichen Menge partikulärer Abbauprodukte erreicht werden. Gewisse Anteile der gasförmigen Abbauprodukte können unter Umständen auch bereits am feinteiligen Feststoff (8) absorbiert und im Feststofffilter abgeschieden werden. Bei den Filterelementen können die üblichen, dem Fachmann prinzipiell bekannten Filterelemente, beispielsweise Filterkerzen aus keramischen Werkstoffen, ausgewählt werden. Feststofffilter sind kommerziell erhältlich.

Der noch mit den gasförmigen Abbauprodukten beladene Abgasstrom (10) wird in eine zweite Filtereinheit (6) eingeleitet, in der die verbliebenen gasförmigen Abbauprodukte oxidativ abgebaut werden. Es entsteht ein Abgas (11) welches im wesentlichen frei von organischen Stoffen ist. Als Oxidationsmittel kommen vor allem atmosphärischer Sauerstoff und daraus gewonnene Formen von aktivem Sauerstoff, wie beispielsweise atomarer Sauerstoff oder Ozon in Frage.

Bei der oxidativen Reinigungsstufe handelt es sich um eine Vorrichtung zur katalytischen Oxidation der Abgase. Hierbei werden die im Abgas vorhandenen gasförmigen Abbauprodukte in Gegenwart eines geeigneten Katalysators im wesentlichen zu CO₂ und H₂O oxidiert. Als Katalysatoren kommen beispielsweise Edelmetallkatalysatoren auf geeigneten Trägern oder Katalysatoren auf Basis von Übergangmetalloxiden oder anderen Übergangsmetallverbindungen, beispielsweise von V, Cr, Mo, W, Co oder Cu in Frage. Der Fachmann trifft unter den möglichen Katalysatoren je nach den konkreten Verhältnissen eine geeignete Auswahl. Die Auswahl eines Katalysators richtet sich auch nach dem zu gravierenden Material. Edelmetallkatalysatoren sind im Regelfalle aktiver als Katalysatoren auf Basis von Übergangmetallen, aber empfindlicher gegenüber Katalysatorgiften, wie H₂S oder anderen schwefelhaltigen Verbindungen. Zur Gravur von Flexodruckelementen, welche S-haltige Verbindungen enthalten können, z.B. S-Vemetzer, empfiehlt es sich daher, Katalysatoren auf Basis von Übergangsmetalloxiden einzusetzen. Die katalytische Reinigungsstufe wird üblicherweise bei Temperaturen zwischen 250 und 400°C betrieben. Weitere Einzelheiten zur katalytischen Oxidation und dazu geeigneten Katalysatoren sind Martin Goede, "Entstehung und Minderung der Schadstoffemissionen bei der Laserstrahlbearbeitung von Polymenwerkstoffen", Fortschritt-Berichte VDI, Reihe 5, Nr. 587, Düsseldorf, VDI-Verlag, 2000, Seiten 36 bis 41 und der dort zitierten Literatur zu entnehmen, auf das wir an dieser Stelle ausdrücklich verweisen.

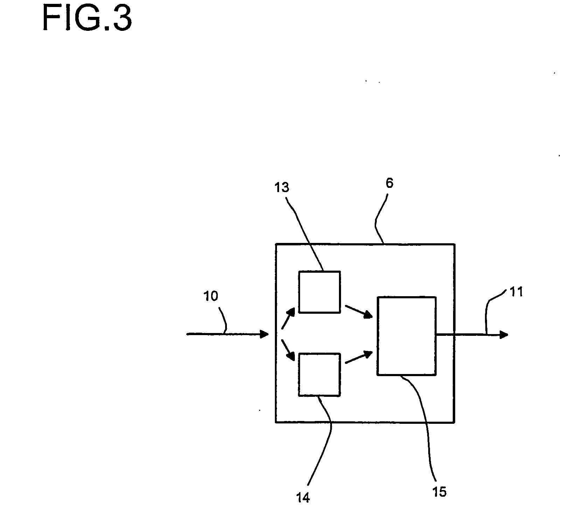

Erfindungsgemäß umfasst die zweite Filtereinheit (6) noch eine der oxidativen Reinigungsstufe (15) vorgeschaltete Puffereinheit. Dies ist schematisch in Abbildung 3 dargestellt. In einer Puffereinheit
(13, 14) werden die gasförmigen Anteile im Abgas ganz oder teilweise gesammelt und von dort aus nach und nach wieder in einer definierten Konzentration an die oxidative Reinigungsstufe abgegeben. Vorteilhaft wird hierdurch erreicht, dass Spitzenkonzentrationen der gasförmigen Abbauprodukte im Abgas abgefangen werden können, so dass die Filtereinheit nicht für den Spitzenbetrieb ausgelegt werden muss, sondern mehr oder weniger kontinuierlich arbeiten kann, beispielsweise auch dann, wenn gerade wegen Plattenwechsels nicht graviert wird.

Die Puffereinheit kann beispielsweise aus zwei Gefäßen (13, 14) bestehen, welche mit einem geeigneten Material zum Absorbieren gefüllt sind. Bei geeigneten Materialien handelt es sich beispielsweise um Zeolithe, insbesondere hydrophobe Zeolithe mit 5 bis 6 Å Porengröße. Die Puffer können beispielsweise so betrieben werden, dass zunächst die Abbauprodukte in einem Absorber gesammelt werden, bis dieser seine maximale Beladung erreicht hat. Dann wird auf den zweiten Absorber umgeschaltet, während der erste wieder geleert wird, beispielsweise durch Temperaturerhöhung und/oder Durchleiten von Gasen, und die adsorbierten organischen Stoffe nach und nach an die oxidative Reinigungsstufe (15) abgibt. Es sind selbstverständlich auch andere Ausführungsformen einer Puffereinheit denkbar. Beispielsweise könnte das Abgas im Regelfalle direkt in die oxidative Reinigungsstufe geleitet und nur bei Überschreiten einer bestimmten Fracht organischer Verunreinigungen ein Teil des Abgasstromes in den Puffer umgeleitet werden, um eine Überlastung der oxidativen Reinigungsstufe zu vermeiden. Bei geringerer Beladung kann der Inhalt des Puffers dann wieder in den Abgasstrom entleert werden.

Das erfindungsgemäße Verfahren kann selbstverständlich noch weitere Verfahrensschritte und die eingesetzte Apparatur noch weitere Komponenten umfassen. Beispielsweise kann es sich hierbei um eine zusätzliche Filtereinheit handeln, in welcher gezielt H₂S oder andere S-haltige Verbindungen abgeschieden werden. Hierbei kann es sich beispielsweise um eine absorptive Filterstufe (z.B. eine Alkaliwäsche) oder um Biofilter handeln.

Es kann nur eine einzige Einheit zur Laser-Direktgravur mit der beschriebenen Kombination aus zwei Filtereinheiten verbunden sein. Falls ein Betrieb aber mehrere Laserapparaturen betreibt, können durchaus auch mehrere Laserapparaturen auf geeignete Art und Weise mit einer einzigen Kombination aus Filtereinheiten zur gemeinsamen Reinigung der Abgase aller Laserapparaturen verbunden sein.

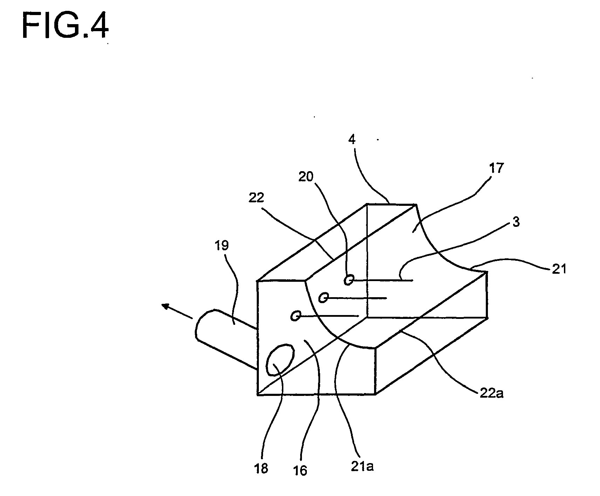

In einer besonders vorteilhaften Ausführungsform des erfindungsgemäßen Verfahrens wird eine spezielle Absaugvorrichtung eingesetzt, wie in den Abbildungen 4 bis 6 schematisch dargestellt. Hierdurch wird eine besonders vollständige und schnelle Absaugung der Zersetzungsprodukte gewährleistet und die Verunreinigung der Oberfläche der gravierten Flexodruckformen durch Zersetzungsprodukte im wesentlichen verhindert.

Die Absaugvorrichtung (4) ist mit dem Laserkopf (Der Laserkopf ist in Abb. 4 der Übersicht halber weggelassen) verbunden. Falls der Laserkopf beweglich gelagert ist, wird sie mit dem Laserkopf mitbewegt. Bei der Absaugvorrichtung handelt es sich um einen Hohlkörper, der eine Rückseite (16) sowie eine gegenüber der Rückseite angeordnete Absaugeöffnung (17) aufweist, und abgesehen von den noch zu schildernden Durchführungen geschlossen ist. Die jeweils gegenüberliegenden Flächen können parallel zueinander angeordnet sein, dies ist aber nicht erforderlich. Die Flächen können gegebenenfalls auch Krümmungen aufweisen, oder zwei Flächen können auch ohne Kante ineinander übergehen. Erfindungswesentlich ist neben den von der Funktion geforderten Durchführungen die Art und Anordnung der Absaugöffnung (17).

Die Absaugvorrichtung (4) weist mindestens eine Durchführung (18) zum Anschluss einer Absaugleitung (19) auf. Die Durchführung (18) befindet sich bevorzugt an der Rückseite (16) oder der Unterseite der Vorrichtung, ohne dass die Erfindung darauf beschränkt sein soll. Es kann sich auch um mehrere Durchführungen für das Abgas handeln. Die Rückseite weist weiterhin mindestens ein Fenster (20) zur Durchführung eines Laserstrahles (3) auf. Sie kann selbstverständlich auch mehr als ein Fenster aufweisen, falls mehrere Laserstrahlen zum Einsatz kommen. In Abbildung 4 sind drei Laserfenster eingezeichnet. Bevorzugt sind in beliebiger Position, neben den Fenstern, beispielsweise oberhalb oder unterhalb der Fenster, eine oder mehrere Düsen (17) angeordnet, mit denen Druckluft oder ein anderes Gas zum Spülen über die Fenster geblasen wird. Hierdurch kann verhindert werden, dass die Abbauprodukte der reliefbildenden Schicht die Laserfenster verschmutzen oder gar vollständig zusetzen. Die Düsen sind in der Zeichnung der Übersicht halber weggelassen.

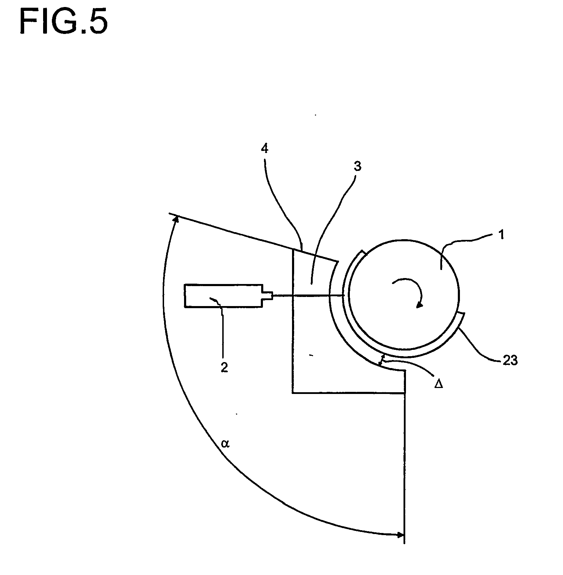

Die Absaugöffnung (17) weist zwei gegenüber liegende-im Regelfalle horizontal verlaufende- bogenförmige Kanten (21) und (21 a) auf, deren Radius dem Radius des Trägerzylinders angepasst ist. Die Länge der Kanten (21) und (21 a) ist bevorzugt gleich. Abbildung 5 zeigt einen Querschnitt durch den Trägerzylinder (1) und die Absaugvorrichtung (4). Auf dem Trägerzylinder (1) ist ein lasergravierbares Flexodruckelement (23) aufgebracht. Der Trägerzylinder passt genau in den von den bogenförmigen Kanten gebildeten Sektor. Der Abstand zwischen den Kanten (18) und (18a) sowie der Oberfläche des Flexodruckelementes ist in der Abbildung mit Δ bezeichnet. In aller Regel sollte Δ < 20 mm sein. Bevorzugt beträgt Δ 1 bis 8 mm und besonders bevorzugt 2 bis 5 mm. Der Abstand zwischen der Oberfläche des Trägerzylinders und den Kanten (21) und (21 a) ist naturgemäß größer als der Abstand Δ zwischen der Oberfläche des Flexodruckelementes und den Kanten.

Bei den bogenförmigen Kanten handelt es sich bevorzugt um kreisförmige Kanten. In diesem Falle ist der Abstand Δ entlang der gesamten Kante gleich. Es kann sich aber auch um eine elliptisch oder anderes bogenförmig geformte Kante handeln. In diesem Falle verändert sich der Abstand Δ entlang der Kante. Bevorzugt sollte aber auch in diesem Falle Δ an jeder Stelle der Kante kleiner als 20 mm sein. Ein veränderlicher Abstand Δ kann sich auch dann ergeben, wenn der Trägerzylinder gegen einen anderen Trägerzylinder mit geringerem Radius ausgetauscht wird. Dies sollte aber möglichst vermieden werden, sondern für Trägerzylinder verschiedenen Durchmessers sollten auch jeweils angepasste Absaugungen vorrätig sein.

Die Enden der bogenförmigen Kanten weisen jeweils den Winkel α zueinander auf. Durch diesen Winkel wird die Größe der Absaugöffnung definiert. α kann eine Größe von bis zu 180° aufweisen. Bewährt hat sich ein Winkel α von 30° bis 180°. Die Enden der Kanten (21) und (21 a) sind jeweils durch die einander gegenüber liegenden Kanten (22) und (22a) miteinander verbunden. Auch diese Kanten befinden sich bevorzugt jeweils im Abstand Δ von der Oberfläche des lasergravierbaren Flexodruckelementes. Bei den verbindenden Kanten kann es sich um gerade Kanten handeln (in Abbildung 4 so dargestellt) oder die Kanten können auch eine Krümmung aufweisen. Bevorzugt handelt es sich um gerade Kanten.

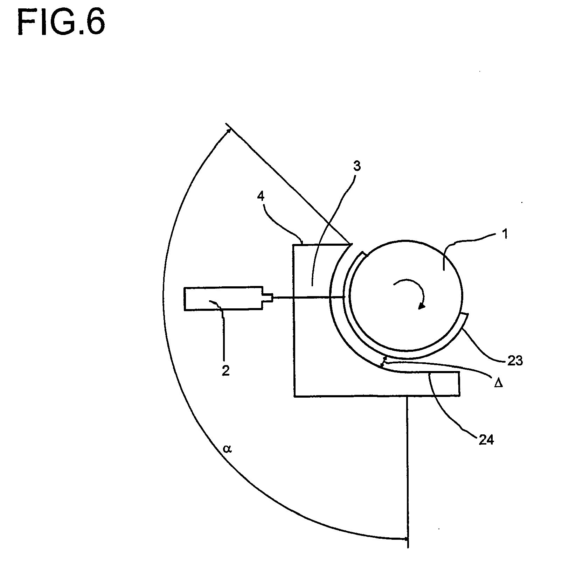

Abbildung 6 zeigt eine weitere Ausführungsform der Absaugvorrichtung. In diesem Falle ist die Kante (21) (bzw. (21 a), nicht gezeigt) noch um eine lineare Kante (24) verlängert. In diesem Bereich wird der Abstand Δ nicht mehr eingehalten. Der Winkel α bezieht sich jeweils nur auf die eigentliche bogenförmige Kante (21) bzw. (21 a), wie in Abbildung 6 veranschaulicht.

Alle Kanten sollten bevorzugt abgerundet sein, um unnötige Turbulenzen zu vermeiden. Zusätzlich kann um die Kanten (21), (21 a), (22) und/oder (22a) eine Konstruktion angebracht sein, die zur Vergößerung des Abluft-Erfassungsquerschnittes dient. Geeignete Konstruktionen sind beispielsweise plane oder gekrümmte Bleche, die kragen-oder flanschähnlich um den eigentlichen Absaugkopf herum angeordnet sind.

Optional kann die Absaugvorrichtung noch weitere Durchführungen aufweisen, beispielsweise zur Durchführung von analytischen Instrumenten, Messköpfen oder dergleichen, bzw. deren Anschlüsse.

Zweckmäßigerweise ist die Absaugvorrichtung leicht demontierbar mit dem Laserkopf verbunden, beispielsweise durch Schnellspannschrauben. Hierdurch wird erreicht, dass beim Auswechseln des zylindrischen Trägers gegen einen mit einem anderen Radius auch ohne großen Zeitverlust eine neue Absaugevorrichtung mit entsprechend angepasstem Radius montiert werden kann.

Zur Ausführung des erfindungsgemäßen Verfahrens wird zunächst ein lasergravierbares Flexodruckelementes auf den zylindrischen Träger aufgebracht und der zylindrische Träger in die Aufnahmeeinheit montiert. Zur Montage werden der Laserkopf und der zylindrische Träger soweit auseinandergefahren, dass eine problemlose Montage möglich ist. Auf die Reihenfolge kommt es hierbei nicht an. Falls es sich um ein flächenförmiges Flexodruckelement handelt, kann zunächst der zylindrische Träger in die Apparatur eingebaut werden und dann die Platte darauf. Alternativ können zunächst der Zylinder und das Flexodruckelement außerhalb der Apparatur vormontiert werden und dann in die Apparatur eingebaut werden. Beim Gravieren mehrerer verschiedener Flexodruckelemente nacheinander kann man selbstverständlich den Trägerzylinder in der Aufnahmevorrichtung belassen und die Montage des Flexodruckelementes auf dem bereits in die Aufnahmevorrichtung eingebauten Zylinder vornehmen. Das gleiche gilt, wenn man einen Sleeve in Kombination mit einem Trägerzylinder, beispielsweise einem Luftzylinder, benutzt. Wird der Sleeve selbsttragend, d.h. ohne zusätzlichen Zylinder eingesetzt, ist die Reliefschicht naturgemäß schon auf dem zylindrischen Träger aufgebracht. Nach der Montage wird der mit dem Flexodruckelement versehene zylindrische Träger mittels der Antriebseinheit in Drehung versetzt.

Mit Hilfe des mindestens einen Laserstrahls wird anschließend ein Druckrelief in die reliefbildende Schicht eingraviert. Die Tiefe der einzugravierenden Elemente richtet sich nach der Gesamtdicke des Reliefs und der Art der einzugravierenden Elemente und wird vom Fachmann je nach den gewünschten Eigenschaften der Druckform bestimmt. Die Tiefe der einzugravierenden Reliefelemente beträgt zumindest 0,03 mm, bevorzugt mindestens 0,05 mm ― genannt ist hier die Mindesttiefe zwischen einzelnen Rasterpunkten. Druckplatten mit zu geringen Relieftiefen sind für das Drucken mittels Flexodrucktechnik im Regelfalle ungeeignet, weil die Negativelemente mit Druckfarbe vollaufen. Einzelne Negativpunkte sollten üblicherweise größere Tiefen aufweisen; für solche von 0,2 mm Durchmesser ist üblicherweise eine Tiefe von mindestens 0,07 bis 0,08 mm empfehlenswert. Bei weggravierten Flächen empfiehlt sich eine Tiefe von mehr als 0,15 mm, bevorzugt mehr als 0,3 mm und besonders bevorzugt mehr als 0,5 mm. Letzteres ist natürlich nur bei einem entsprechend dickem Relief möglich.

Die Laserapparatur kann nur über einen einzigen Laserstrahl aufweisen. Bevorzugt weist die Apparatur aber zwei oder mehrere Laserstrahlen auf. Die Laserstrahlen können alle die gleiche Wellenlänge aufweisen oder es können Laserstrahlen unterschiedlicher Wellenlänge eingesetzt werden. Weiterhin bevorzugt ist mindestens einer der Strahlen speziell zum Erzeugen von Grobstrukturen und mindestens einer der Strahlen zum Schreiben von Feinstrukturen angepasst. Mit derartigen Systemen lassen sich besonders elegant qualitativ hochwertige Druckformen erzeugen. Beispielsweise kann es sich bei den Lasern um CO₂-Laser handeln, wobei der Strahl zur Erzeugung der Feinstrukturen eine geringere Leistung aufweist als die Strahlen zur Erzeugung von Grobstrukturen. So hat sich beispielsweise die Kombination von Strahlen mit einer Nennleistung von 150 bis 250 W als besonders vorteilhaft erwiesen. Mit dem Strahl zur Erzeugung von Feinstrukturen werden bevorzugt nur die Ränder der Reliefelemente sowie der oberste Schichtabschnitt der reliefbildenden Schicht graviert. Die leistungsstärkeren Strahlen dienen bevorzugt zum Vertiefen der erzeugten Strukturen sowie zum Ausheben größerer nichtdruckender Vertiefungen. Die Einzelheiten richten sich selbstverständlich auch nach dem zu gravierenden Motiv.

Nach vollständiger Gravur wird der Antrieb des Zylinders wieder abgeschaltet und die fertige Flexodruckplatte bzw. der fertige Sleeve entnommen.

Im Regelfalle ist keine weitere Reinigung der Druckplatte mit Hilfe von Lösemitteln erforderlich. Gegebenenfalls können Reste von Staub oder dergleichen durch einfaches Abblasen mit Druckluft oder Abbürsten entfernt werden.

Falls eine Nachreinigung erforderlich sein sollte, empfiehlt es sich, diese nicht mittels eines stark quellenden Lösemittels oder Lösemittelgemisches vorzunehmen, sondern es sollte ein wenig quellaktives Lösemittel bzw. Lösemittelgemisch eingesetzt werden. Sofern es sich bei den Bindemitteln um in organischen Lösemitteln lösliche bzw. quellbare Bindemittel wie bspw. Styrol-Butadien oder Styrol-Isopren-Blockcopolymere handelt, kann die Nachreinigung vorteilhaft mittels Wasser oder einem wässrigen Reinigungsmittel erfolgen. Wässrige Reinigungsmittel bestehen im wesentlichen aus Wasser sowie optional geringen Mengen von Alkoholen und/oder Hilfsmitteln, wie beispielsweise Tensiden, Emulgatoren, Dispergierhilfsmitteln oder Basen. Die Nachreinigung kann beispielsweise durch einfaches Eintauchen oder Abspritzen der Reliefdruckform erfolgen oder aber auch zusätzlich durch mechanische Mittel, wie beispielsweise durch Bürsten oder Plüsche unterstützt werden. Es können auch übliche Flexowascher verwendet werden.

Mittels des erfindungsgemäßen Verfahrens zur Herstellung von Flexodruckformen wird das Abgas wirkungsvoll und wirtschaftlich gereinigt. Geforderte Grenzwerte werden eingehalten. Es ist nicht erforderlich, mit Abbauprodukten beladene Absorber wie beispielsweise Aktivkohle kostenträchtig zu reaktivieren oder zu entsorgen. Durch die Beschichtung mit einem nicht-klebrigen Feststoff können auch die klebrigen Aerosole wirkungsvoll abschieden werden, ohne dass es zu Verstopfungen des Filters kommt. Die Anlage kann klein und kompakt gebaut werden. Sie ist daher besonders für kleine und mittelgroße Betriebe geeignet.

## Patentansprüche

1. Verfahren zur Herstellung von Flexodruckformen mittels Laser-Direktgravur durch Eingravieren eines Reliefs in ein lasergravierbares Flexodruckelement unter Verwendung einer Laserapparatur, welche mindestens
• eine Einheit zur Aufnahme eines zylindrischen Trägers für Flexodruckelemente, in der der zylindrische Träger drehbar gelagert werden kann,
• eine Antriebseinheit zum Drehen des Zylinders,
• einen Laserkopf, welcher mindestens einen Laserstrahl emittiert, wobei der Laserkopf sowie die Aufnahmevorrichtung mit dem zylindrischen Träger koaxial gegeneinander verschiebbar gelagert sind, sowie
• eine Absaugvorrichtung umfasst,
und bei dem man als Ausgangsmaterial ein lasergravierbares Flexodruckelement, mindestens umfassend einen dimensionsstabilen. Träger sowie eine elastomere, reliefbildende Schicht mit einer Dicke von mindestens 0,2 mm, umfassend mindestens ein elastomeres Bindemittel, einsetzt,
wobei das Verfahren mindestens die folgenden Schritte umfasst:
(a) Aufbringen eines lasergravierbaren Flexodruckelementes auf den zylindrischen Träger und Montieren des zylindrischen Trägers in die Aufnahmeeinheit,
(b) Versetzen des zylindrischen Trägers in Drehung,
(c) Eingravieren eines Druckreliefs in die reliefbildende Schicht mit Hilfe des mindestens einen Laserstrahles, wobei die Tiefe der mit dem Laser einzugravierenden Reliefelemente mindestens 0,03 mm beträgt,
**dadurch gekennzeichnet, dass** man mittels der Absaugvorrichtung die im Zuge der Gravur gebildeten partikulären und gasförmigen Abbauprodukte aufnimmt und den mit den Abbauprodukten beladenen Abgasstrom mittels eines Systems aus mindestens zwei verschiedenen Filtereinheiten reinigt, wobei man in einer ersten Filtereinheit partikuläre Abbauprodukte in Gegenwart eines feinteiligen, nicht klebrigen-Feststoffes mittels eines Feststofffilters abscheidet und danach in einer zweiten Filtereinheit verbliebene gasförmige Abbauprodukte mittels katalytischer Oxidation oxidativ aus dem Abgasstrom entfernt, wobei die Menge des angesaugten Gases mindestens 0,1 m³ pro g abgebauten Materials beträgt und die zweite Filtereinheit eine der oxidativen Reinigungsstufe vorgeschaltete Puffereinheit umfasst, in der die gasförmigen Abbauprodukte im Abgas ganz oder teilweise gesammelt und in einer definierten Konzentration an die oxidative Reinigungsstufe abgegeben werden.

2. Verfahren gemäß Anspruch 1, **dadurch gekennzeichnet, dass** der oxidative Abbau in der zweiten Filtereinheit mittels eines Niedertemperaturplasmas vorgenommen wird.

3. Verfahren gemäß Anspruch 1, **dadurch gekennzeichnet, dass** es sich bei dem feinteiligen, nicht-klebrigen Feststoff um mindestens einen ausgewählt aus der gruppe von Lehm, CaCO₃, Aktivkohle oder SiO₂ handelt.

4. Verfahren gemäß Anspruch 1, **dadurch gekennzeichnet, dass** es sich bei der Absaugvorrichtung um einen Hohlkörper handelt, der mit dem Laserkopf verbunden ist, und der mindestens eine Rückseite (16) mit mindestens einem Fenster (20) zur Durchführung eines oder mehrerer Laserstrahlen, eine beliebig angeordnete Durchführung (18) zum Anschluss einer Absaugleitung (19) sowie eine der Rückseite gegenüber liegende Absaugöffnung (17) umfasst, wobei die Absaugöffnung zwei gegenüber liegende bogenförmige Kanten (21) und (21 a) aufweist, deren Radius dem Radius des Trägerzylinders angepasst ist.

5. Verfahren gemäß Anspruch 4, **dadurch gekennzeichnet, dass** der Abstand Δ zwischen den Kanten sowie der Oberfläche eines sich auf dem Zylinder befindlichen Flexodruckelementes 1 bis 20 mm ist.

6. Verfahren gemäß einem der Ansprüche 1 bis 5, **dadurch gekennzeichnet, dass** das als Ausgangsmaterial eingesetzte lasergravierbare Flexodruckelement Komponenten umfasst, welche Butadien und/oder Isopren als Bausteine umfassen.

7. Verfahren gemäß Anspruch 6, **dadurch gekennzeichnet, dass** das Flexodruckelement Bindemittel auf Basis von Styrol-Butadien und/oder Styrol-Isopren-Blockcopolymeren umfasst.

8. Verfahren gemäß Anspruch 6 oder 7, **dadurch gekennzeichnet, dass** das Flexodruckelement Butadien und/oder isopren umfassende Weichmacher umfasst.

## Claims

1. Process for the production of flexographic printing plates by means of direct laser engraving by engraving a relief in a laser-engravable flexographic printing element using a laser apparatus which comprises at least
• one unit for holding a cylindrical substrate for flexographic printing elements in which the cylindrical substrate can be rotatably mounted,
• one drive unit for rotating the cylinder,
• one laser head which emits at least one laser beam, the laser head and the holding apparatus with the cylindrical substrate being mounted so as to be displaceable coaxially relative to one another, and
• one suction apparatus,
and in which a laser-engravable flexographic printing element at least comprising a dimensionally stable substrate and an elastomeric, relief-forming layer having a thickness of at least 0.2 mm, comprising at least one elastomeric binder, is used as starting material,
the process comprising at least the following steps:
(a) application of a laser-engravable flexographic printing element to the cylindrical substrate and mounting of the cylindrical substrate in the holding unit,
(b) rotation of the cylindrical substrate,
(c) engraving of a printing relief into the relief-forming layer with the aid of the at least one laser beam, the depth of the relief elements to be engraved by the laser being at least 0.03 mm,
**characterized in that** the particulate and gaseous degradation products formed in the course of the engraving are taken up by means of the suction apparatus, and the waste gas stream laden with the degradation products is purified by means of a system comprising at least two different filter units, particulate degradation products being deposited in a first filter unit in the presence of a finely divided, nontacky solid by means of a solids filter and remaining gaseous degradation products then being removed oxidatively by means of catalytic oxidation from the waste gas stream in a second filter unit, the amount of the aspirated gas being at least 0.1 m³ per g of degraded material and the second filter unit comprising a buffer unit upstream of the oxidative purification stage, in which buffer unit the gaseous degradation products in the waste gas are completely or partially collected and are released in a defined concentration to the oxidative purification stage.

2. Process according to Claim 1, **characterized in that** the oxidative degradation in the second filter unit is carried out by means of a low temperature plasma.

3. Process according to Claim 1, **characterized in that** the finely divided, nontacky solid is at least one such solid selected from the group consisting of loam, CaCO₃, active carbon or SiO₂.

4. Process according to Claim 1, **characterized in that** the suction apparatus is a hollow body which is connected to the laser head and which comprises at least one back (16) having at least one window (20) for the passage of one or more laser beams, an arbitrarily arranged passage (18) for connection of a suction pipe (19) and a suction orifice (17) located opposite the back, the suction orifice having two arc-shaped edges (21) and (21a) which are located opposite one another and whose radius is adapted to the radius of the substrate cylinder.

5. Process according to Claim 4, **characterized in that** the distance Δ between the edges and the surface of a flexographic printing element present on the cylinder is from 1 to 20 mm.

6. Process according to any of Claims 1 to 5, **characterized in that** the laser-engravable flexographic printing element used as starting material comprises components which comprise butadiene and/or isoprene as building blocks.

7. Process according to Claim 6, **characterized in that** the flexographic printing element comprises binders based on styrene/butadiene and/or styrene/isoprene block copolymers.

8. Process according to Claim 6 or 7, **characterized in that** the flexographic printing element comprises plasticizers comprising butadiene and/or isoprene.

## Revendications

1. Procédé de fabrication de clichés d'impression flexographique au moyen d'une gravure directe au laser consistant à graver un relief dans un élément d'impression flexographique pouvant être gravé au laser en utilisant un appareil à laser, qui comprend au moins :
• une unité pour loger un support cylindrique destiné à des éléments d'impression flexographique, dans laquelle le support cylindrique peut être monté à rotation,
• une unité d'entraînement permettant de mettre le cylindre en rotation,
• une tête laser, qui émet au moins un faisceau laser, la tête laser ainsi que le dispositif de logement contenant le support cylindrique étant montés de sorte qu'ils puissent coulisser de manière coaxiale l'un par rapport à l'autre, et
• un dispositif d'aspiration,
et dans lequel on utilise, comme matériau de départ, un élément d'impression flexographique pouvant être gravé au laser, comprenant au moins un support stable au plan dimensionnel, ainsi qu'une couche élastomère formatrice d'un relief d'une épaisseur d'au moins 0,2 mm, comprenant au moins un liant élastomère,
le procédé en question comprenant au moins les étapes suivantes :
(a) l'application d'un élément d'impression flexographique pouvant être gravé au laser sur le support cylindrique et le montage du support cylindrique dans l'unité de logement,
(b) la mise en rotation du support cylindrique,
(c) la gravure d'un relief d'impression sur la couche formatrice d'un relief à l'aide du au moins un faisceau laser, la profondeur des éléments de relief à graver au laser étant d'au moins 0,03 mm,
**caractérisé en ce que** les produits de dégradation particulaires et gazeux formés au cours de la gravure sont recueillis au moyen du dispositif d'aspiration, et **en ce que** le courant de gaz d'évacuation chargé des produits de dégradation est purifié au moyen d'un système constitué d'au moins deux unités de filtration différentes, les produits de dégradation particulaires étant séparés dans une première unité de filtration en présence d'un solide finement divisé non collant, au moyen d'un filtre à solides, et en éliminant ensuite du courant de gaz d'évacuation, dans une deuxième unité de filtration, les produits de dégradation gazeux résiduels par le biais d'une oxydation catalytique, au cours de laquelle la quantité de gaz aspirée est d'au moins 0, 1 m³ par g de matériau dégradé et la deuxième unité de filtration comprenant une unité tampon disposée en amont de l'étape de purification par oxydation, dans laquelle les produits de dégradation gazeux dans le gaz d'évacuation sont totalement ou partiellement collectés et délivrés en concentration définie à l'étape de purification par oxydation.

2. Procédé selon la revendication 1, **caractérisé en ce que** l'on effectue la dégradation oxydative dans la deuxième unité de filtration au moyen d'un plasma à basse température.

3. Procédé selon la revendication 1, **caractérisé en ce que** le solide finement divisé non collant est au moins une substance choisie parmi la terre glaise, le CaCO₃, le charbon actif ou le SiO₂.

4. Procédé selon la revendication 1, **caractérisé en ce que** le dispositif d'aspiration est un corps creux, qui est raccordé à la tête laser et qui comprend au moins une face arrière (16) dotée d'au moins une fenêtre (20) pour le passage d'un ou de plusieurs faisceaux laser, un passage (18) aménagé de manière quelconque pour raccorder une conduite d'aspiration (19), ainsi qu'une ouverture d'aspiration (17) située à l'opposée de la face arrière, laquelle ouverture d'aspiration présente deux bords (21) et (21a) en forme d'arc opposés l'un à l'autre, dont le rayon est adapté à celui du cylindre de support.

5. Procédé selon la revendication 4, **caractérisé en ce que** la distance Δ entre les bords et la surface d'un élément d'impression flexographique se trouvant sur le cylindre est de 1 à 20 mm.

6. Procédé selon l'une quelconque des revendications 1 à 5, **caractérisé en ce que** l'élément d'impression flexographique pouvant être gravé au laser et utilisé comme matériau de départ, comprend des composants qui présentent, comme constituants, du butadiène et/ou de l'isoprène.

7. Procédé selon la revendication 6, **caractérisé en ce que** l'élément d'impression flexographique comprend un liant à base de copolymères séquencés de styrène-butadiène et/ou de styrène-isoprène.

8. Procédé selon la revendication 6 ou 7, **caractérisé en ce que** l'élément d'impression flexographique comprend des plastifiants comprenant du butadiène et/ou de l'isoprène.
